# EUROPÄISCHE PATENTANMELDUNG

(11) **EP 1 486 369 A1**
(43) Veröffentlichungstag der Anmeldung: **15.12.2004**
(21) Anmeldenummer: 04007883.4
(22) Anmeldetag: 01.04.2004
(51) Int. Cl.: B60K 31/00, G01S 13/93

(54) **Verfahren zur Regelung des Überholens**

(30) Priorität: 30.05.2003 DE 10324725
(71) Anmelder: WABCO GmbH & CO. OHG, 30453 Hannover (DE)
(72) Erfinder: Dieckmann, Thomas, Dr., 30982 Pattensen (DE); Zielke, Frank, 30890 Barsinghausen (DE)
(74) Vertreter: Schrödter, Manfred

(57) **Zusammenfassung**

Die Erfindung betrifft ein Verfahren zur Regelung des Überholens auf einer Nichtüberholspur von mehrspurigen Fahrbahnen zwischen einem zu steuernden Fahrzeug und wenigstens einem weiteren vorausfahrenden Fahrzeug unter Verwendung einer Abstands- und Geschwindigkeitsregeleinrichtung, bei dem mehrere dem zu steuernden Fahrzeug vorausfahrende Fahrzeuge erfasst und überwacht werden, die Fahrbahnspuren für die vorausfahrenden Fahrzeuge ermittelt und anhand der jeweils ermittelten Spur, Geschwindigkeiten und/oder Abstände der vorausfahrenden Fahrzeuge zum zu steuernden Fahrzeug die Geschwindigkeit des zu steuernden Fahrzeugs so angepasst wird, dass ein Überholen auf der Überholspur zugelassen wird, wenn das vorausfahrende Fahrzeug auf einer Nichtüberholspur fährt und ein Überholen auf einer Nichtüberholspur nicht zugelassen wird, wenn das vorausfahrende Fahrzeug auf einer Überholspur fährt. Um den Fahrer bei Einleitung eines Überholvorganges auf einer Nichtüberholspur zu unterstützen, wird ermittelt, ob das auf einer Überholspur vorausfahrende Fahrzeug ein Einzelfahrzeug oder Fahrzeug einer Fahrzeugkolonne ist. Dabei wird ein Überholen auf der Nichtüberholspur bei erkanntem Einzelfahrzeug verhindert und bei erkannter Kolonne ein Überholen auf der Nichtüberholspur in Abhängigkeit von länderspezifischen gesetzlichen Bestimmungen erlaubt, wobei die Geschwindigkeit auf eine Kolonnenüberholgeschwindigkeit eingeregelt wird.

## Beschreibung

Die Erfindung betrifft ein Verfahren zur Regelung des Überholens auf einer Nichtüberholspur gemäß Oberbegriff des Anspruchs 1.

Durch die EP 0 716 949 B1 ist eine Reisegeschwindigkeitssteuerung für Fahrzeuge bekannt, die feststellt, ob das dichteste vorausfahrende Fahrzeug auf derselben Fahrbahn wie das zu steuernde Fahrzeug oder auf einer benachbarten Fahrspur fährt. Fährt das dichteste vorausfahrende Fahrzeug auf einer benachbarten langsameren Fahrspur und fährt langsamer als das zu steuernde Fahrzeug, wird das Überholen dieses Fahrzeugs zugelassen. Fährt das dichteste vorausfahrende Fahrzeug auf einer benachbarten, schnelleren Spur und schneller als das steuernde Fahrzeug, wird das Überholen des Fahrzeugs verhindert. Diese Reisegeschwindigkeitssteuerung lässt somit ein Überholen auf der schnelleren Überholspur (in Deutschland linke Spur) zu und verhindert ein solches Überholen auf der langsameren Überholspur (in Deutschland rechte Spur) grundsätzlich, berücksichtigt aber die Fahrumfeldsituationen und gesetzlichen Bestimmungen in nur begrenztem Umfang.

Die Aufgabe der vorliegenden Erfindung besteht darin, ein Abstands- und Geschwindigkeitsregelsystem zu schaffen, das den Fahrer bei Einleitung eines Überholvorganges auf einer Nichtüberholspur unterstützt und in der Lage ist, eine Vielzahl unterschiedlicher Verkehrssituationen und gesetzlicher Bestimmungen zu berücksichtigen.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

Die Erfindung schlägt vor, eine Abstands- und Geschwindigkeitsregeleinrichtung so weiterzubilden, dass in Abhängigkeit von der jeweiligen Verkehrssituation auf den Fahrbahnen, sowie von der Geschwindigkeit von auf den Fahrspuren erkannten Fahrzeugen und von den jeweiligen nationalen gesetzlichen Vorschriften ein Überholen auf einer Nichtüberholfahrspur (Spur, auf der normalerweise nicht überholt werden darf, z. B. grundsätzliches Verbot des Rechtsüberholens auf einer benachbarten rechten Spur in Deutschland) zugelassen oder verhindert wird. Hierzu enthält die Abstands- und Geschwindigkeitsregelung eine Programmerweiterung, mittels der ermittelt wird, ob das auf einer Überholspur (Spur, auf der überholt werden darf, z. B. auf einer benachbarten linken Spur in Deutschland) vorausfahrende Fahrzeug ein Einzelfahrzeug oder ein Fahrzeug einer Fahrzeugkolonne ist, mittels der ein Überholen auf der Nichtüberholspur bei erkanntem Einzelfahrzeug verhindert wird und bei erkannter Kolonne ein Überholen auf der Nichtüberholspur in Abhängigkeit von landesspezifischen gesetzlichen Bestimmungen erlaubt und die Geschwindigkeit des zu steuernden Fahrzeugs ggf. auf eine Kolonnenüberholgeschwindigkeit eingeregelt wird.

Gemäß einer Weiterbildung der erfindungsgemäßen Aufgabenlösung wird das Überholen der Kolonne auf einer Nichtüberholspur erlaubt, wenn die Geschwindigkeit der Kolonne einen vorgegebenen Grenzwert nicht überschreitet.

Das erfindungsgemäße Verfahren ist vorzugsweise so ausgebildet, dass bei erkanntem Überholwunsch des Fahrers eine Überholfunktion aktiviert wird, die durch eine entsprechende Programmerweiterung der Abstands- und Geschwindigkeitsregeleinrichtung realisiert ist.

Die Kolonnen-Überholgeschwindigkeit wird vorzugsweise in Abhängigkeit vom Abstand und/oder der Relativgeschwindigkeit der auf der Nichtüberholspur befindlichen Fahrzeugkolonne berechnet.

Auf eine Kolonne wird dann erkannt, wenn sich mehrere vorausfahrende Fahrzeuge etwa mit der gleichen Geschwindigkeit bewegen.

Die Erfindung soll nachfolgend anhand der beigefügten Zeichnung näher erläutert werden.

Es zeigt
- Fig. 1: Erfassungsbereiche eines mit einem Abstands- und Geschwindigkeitsregelungssystem ausgestatteten Fahrzeugs auf einer dreispurigen Fahrbahn,
- Fig. 2: ein Blockdiagramm eines erfindungsgemäß ausgebildeten Abstands- und Geschwindigkeitsregelungssystems und
- Fig. 3: ein Flussdiagramm des erfindungsgemäßen Verfahrens.

Gleiche und einander entsprechende Bauteile in den Figuren der Zeichnung sind mit den gleichen Bezugszeichen versehen.

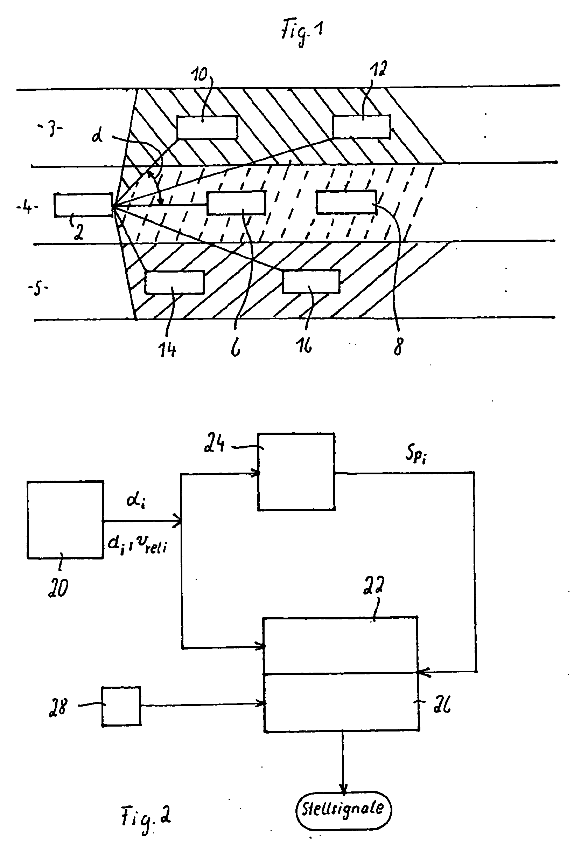

Die Fig. 1 zeigt Erfassungsbereiche eines zu steuernden Fahrzeugs, das mit einer Abstands- und Geschwindigkeitsregeleinrichtung ausgestattet ist. Das zu steuernde Fahrzeug 2 fährt auf der mittleren Spur 4 einer Fahrbahn mit drei Spuren 3, 4, 5. Vor dem Fahrzeug 2 fahren weitere Fahrzeuge 6, 8 auf der eigenen, mittleren Spur, Fahrzeuge 10, 12 auf der benachbarten linken Spur und Fahrzeuge 14, 16 auf der benachbarten rechten Spur. Bezüglich des zu steuernden Fahrzeugs 2 stellen bei Rechtsverkehr die benachbarte linke Spur die Überholspur und die benachbarte rechte Spur die Nichtüberholspur dar. Die Erfassungsbereiche auf den einzelnen Fahrspuren sind unterschiedlich schraffiert dargestellt.

Die Fig. 2 zeigt schematisch den Aufbau eines erfindungsgemäß ausgebildeten Systems zur Regelung von Überholvorgängen. Eine Sensoranlage 20, vorzugsweise eine Radaranlage, liefert Informationen über den Abstand dᵢ und relative Geschwindigkeitswerte vᵣₑₗᵢ zwischen dem zu steuernden Fahrzeug 2 und den auf den Fahrspuren 3, 4, 5 fahrenden weiteren Fahrzeugen 6-16.

Da die Sensoranlage nur eine begrenzte Erfassungstiefe hat, ist die Anzahl der erfassbaren Fahrzeuge auf eine bestimmte Maximalzahl begrenzt. Das unmittelbar vorausfahrende dichteste Fahrzeug 6 wird als Zielfahrzeug ausgewählt und der Abstands- und Geschwindigkeitsregelung zugrunde gelegt.

Die ermittelten Abstandwerte dᵢ und relativen Geschwindigkeitswerte vᵣₑₗᵢ werden an eine Abstands- und Geschwindigkeitsregeleinrichtung 22 zur Auswertung und Erzeugung von Regelgrößen für die Abstands- und Geschwindigkeitsregelung des zu steuernden Fahrzeugs 2 abgegeben. Außerdem liefert die Sensoranordnung 20 Informationen über die Winkel α, unter denen sich die weiteren Fahrzeuge relativ zum zu steuernden Fahrzeug befinden, und über die Zahl der vorausfahrenden Fahrzeuge im jeweils spurzugeordneten Erfassungsbereich.

Anhand der Winkelinformationen ermittelt eine Einrichtung 24 die den erfassten Fahrzeugen 6-16 zugeordneten Fahrspuren 3, 4 und 5. Die Fahrspurinformationen Spᵢ werden der Abstands- und Geschwindigkeitsregeleinrichtung 22 zugeführt, die mit einem durch eine Programmerweiterung 26 der Abstands- und Geschwindigkeitsregeleinrichtung realisierten Überholfunktionsmodul ausgestattet ist.

Im Überholfunktionsmodul werden die Informationen über die Fahrspuren und relativen Geschwindigkeiten der Fahrzeuge auf der eigenen Fahrspur des zu steuernden Fahrzeugs und der Fahrzeuge auf benachbarten Fahrspuren sowie der Zahl der Fahrzeuge im jeweiligen Erfassungsbereich unter Berücksichtigung der gespeicherten gesetzlichen Bestimmungen dahingehend ausgewertet, ob ein Überholen auf einer Nichtüberholspur zugelassen werden kann.

In einer weiteren Ausgestaltung kann auch vorgesehen sein, die im Überholfunktionsmodul bzw. der Programmerweiterung 26 abgelegten länderspezifischen Daten durch Ländererkennung durch ein GPS-System abzurufen. Dabei kann auch vorgesehen sein, die Daten über eine Internet-Verbindung automatisch zu aktualisieren.

Außerdem kann der Fahrer beispielsweise durch Betätigung des Fahrtrichtungsanzeigers 28 dem Überholfunktionsmodul 26 eine Überholabsicht mitteilen, die im Überholfunktionsmodul anhand der vorhandenen Daten ausgewertet wird.

Die Betätigung des Fahrtrichtungsanzeigers kann auch bedeuten, dass nur die Spur ohne Überholabsicht gewechselt werden soll. Durch geeignete Kriterien, beispielsweise die Geschwindigkeit des Fahrzeugs relativ zum vorausfahrenden Fahrzeug kann zwischen reinem Spurwechsel und Überholfunktion erkannt werden. Dazu wird untersucht, ob das eigene Fahrzeug zu dem vorausfahrenden Fahrzeug eine Differenzgeschwindigkeit aufbaut. Fahren beide Fahrzeuge mit annähernd gleicher Geschwindigkeit, liegt keine Überholabsicht vor. Ist eine positive Differenzgeschwindigkeit vorhanden, besteht eine Überholabsicht.

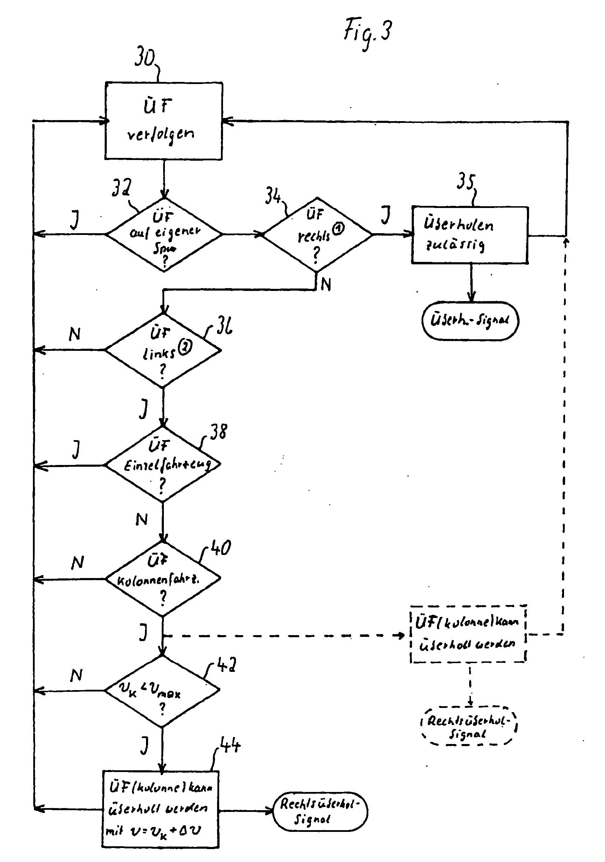

Das erfindungsgemäße Verfahren zur Regelung des Überholens auf einer Nichtüberholspur soll nachfolgend anhand des Flussdiagramms nach Fig. 3 näher erläutert werden.

Im Startschritt 30 wird angenommen, dass das zu steuernde Fahrzeug ein ihm auf einer Fahrspur vorausfahrendes Fahrzeug, das überholt werden soll und nachfolgend Überholfahrzeug ÜF genannt wird, mit Hilfe der Abstands- und Geschwindigkeitsregeleinrichtung verfolgt. Im Schritt 32 wird gefragt, ob das Überholfahrzeug ÜF auf der eigenen Bahn des zu steuernden Fahrzeugs fährt. Ist dies nicht der Fall, wird im Schritt 34 geprüft, ob das Überholfahrzeug auf einer benachbarten Nichtüberholspur (bei Rechtsverkehr eine benachbarte rechte Fahrspur und bei Linksverkehr eine benachbarte linke Fahrspur) fährt. Wenn dies der Fall ist, wird das Überholen des Überholfahrzeugs ÜF im Schritt 35 zugelassen und ein entsprechendes Signal abgegeben. Wenn dies nicht der Fall ist, wird zum Schritt 36 gesprungen, in dem geprüft wird, ob das Überholfahrzeug ÜF auf einer benachbarten Überholfahrspur (bei Rechtsverkehr eine benachbarte linke Fahrspur und bei Linksverkehr eine benachbarte rechte Fahrspur) fährt. Wenn dies nicht der Fall ist, wird zum Anfang zurückgesprungen. Wenn dies der Fall ist, wird zum Schritt 38 gesprungen. Im Schritt 38 wird dann geprüft, ob das Überholfahrzeug ÜF ein Einzelfahrzeug ist. Wenn dies der Fall ist, wird zum Anfang zurückgesprungen und es wird kein Überholsignal abgegeben. Wenn dies nicht der Fall ist, wird im Schritt 40 gefragt, ob das Überholfahrzeug das Fahrzeug einer Kolonne ist. Wenn dies nicht der Fall ist, wird zum Anfang zurückgesprungen ohne Abgabe eines Überholsignals. Wenn dies der Fall ist, wird das Überholen der Kolonne zugelassen und ein Rechts-Überholsignal abgegeben (gestrichelt eingezeichnet) oder wird (unter Berücksichtigung der deutschen Verkehrsregeln) im nächstfolgenden Schritt 42 geprüft, ob die Geschwindigkeit der Fahrzeugkolonne v_{K} kleiner ist als eine vorbestimmte maximale Geschwindigkeit vₘₐₓ (in Deutschland zur Zeit 80km/h). Wenn dies nicht der Fall ist, wird zum Anfang zurückgesprungen ohne Abgabe eines Überholsignals. Wenn dies der Fall ist, wird eine Überholung des Überholfahrzeugs auf einer benachbarten Nichtüberholspur im Schritt 44 zugelassen - ggf. in Abhängigkeit von einer länderspezifischen Bestimmung mit einer Geschwindigkeit v_{Ü}, die die Kolonnengeschwindigkeit v_{K} um einen vorgegebenen Wert Δv (in Deutschland zur Zeit 20 km/h) übersteigt - und ein entsprechendes Signal abgegeben. Danach wird wieder auf den Anfang (Schritt 30) der Abstands- und Geschwindigkeitsregelung gesprungen.

Bei einem Überholwunsch des Fahrers kann vorgesehen werden, den Sollabstand des zu steuernden Fahrzeugs zur Kolonne vorübergehend auf einen vorgegebenen Mindestabstand zu setzen.

Wenn der Überholvorgang abgebrochen wird oder ausgeführt ist oder nur ein Spurwechsel vollzogen ist, wird zur normalen Abstands- und Geschwindigkeitsregelung zurückgekehrt.

## Patentansprüche

1. Verfahren zur Regelung des Überholens auf einer Nichtüberholspur (Spur, auf der nicht überholt werden darf, eine benachbarte rechte Spur bei Rechtsverkehr bzw. eine benachbarte linke Spur bei Linksverkehr, jeweils bezogen auf ein zu steuerndes Fahrzeugs) von mehrspurigen Fahrbahnen zwischen dem zu steuernden Fahrzeug und wenigstens einem weiteren vorausfahrenden Fahrzeug unter Verwendung einer Abstands- und Geschwindigkeitsregeleinrichtung, bei dem mehrere dem zu steuernden Fahrzeug vorausfahrende Fahrzeuge erfasst und überwacht werden, die Fahrbahnspuren für die vorausfahrenden Fahrzeuge ermittelt und anhand der jeweils ermittelten Spur, Geschwindigkeiten und/oder Abstände der vorausfahrenden Fahrzeuge zum zu steuernden Fahrzeug die Geschwindigkeit des zu steuernden Fahrzeugs so angepasst wird, dass ein Überholen auf der Überholspur zugelassen wird, wenn das vorausfahrende Fahrzeug auf einer Nichtüberholspur fährt und ein Überholen auf einer Nichtüberholspur normalerweise nicht zugelassen wird, wenn das vorausfahrende Fahrzeug auf einer Überholspur fährt, **dadurch gekennzeichnet, dass**
- ermittelt wird, ob das auf einer Überholspur vorausfahrende Fahrzeug ein Einzelfahrzeug oder ein Fahrzeug einer Fahrzeugkolonne ist,
- ein Überholen auf der Nichtüberholspur bei erkanntem Einzelfahrzeug verhindert wird und
- bei erkannter Kolonne ein Überholen auf der Nichtüberholspur in Abhängigkeit von länderspezifischen gesetzlichen Bestimmungen erlaubt und die Geschwindigkeit des zu steuernden Fahrzeugs auf eine Kolonnenüberholgeschwindigkeit v_{Ü} eingeregelt wird.

2. Verfahren nach Anspruch 1, **dadurch gekennzeichnet, dass** auf eine Kolonne erkannt wird, wenn sich mehrere vorausfahrende Fahrzeug in etwa mit der gleichen Geschwindigkeit bewegen.

3. Verfahren nach Anspruch 1 oder 2, **dadurch gekennzeichnet, dass** das Überholen der Kolonne auf einer Nichtüberholspur erlaubt wird, wenn die Geschwindigkeit v_{K} der Kolonne einen vorgegebenen Grenzwert vₘₐₓ nicht überschreitet.

4. Verfahren nach Anspruch 1,2 oder 3, **dadurch gekennzeichnet, dass** bei erkanntem Überholwunsch des Fahrers eine Überholfunktion aktiviert wird, die durch eine entsprechende Programmerweiterung (26) der Abstandsund Geschwindigkeitsregeleinrichtung (22) realisiert ist.

5. Verfahren nach einem der vorhergehenden Ansprüche, **dadurch gekennzeichnet, dass** die Kolonnen-Überholgeschwindigkeit v_{Ü} in Abhängigkeit vom Abstand und/oder der Relativgeschwindigkeit der auf der Nichtüberholspur befindlichen Fahrzeugkolonne berechnet wird.

6. Verfahren nach einem der vorhergehenden Ansprüche, **dadurch gekennzeichnet, dass** die Kolonnen-Überholgeschwindigkeit v_{Ü} auf eine vorgegebene Differenz Δv zur Geschwindigkeit v_{K} der Fahrzeugkolonne begrenzt ist.

7. Verfahren nach einem der vorhergehenden Ansprüche, **dadurch gekennzeichnet, dass** der Überholvorgang unterbunden wird, wenn die berechnete Kolonnen-Überholgeschwindigkeit v_{Ü} einen vorgegebenen Maximalwert überschreitet.

8. Verfahren nach einem der vorhergehenden Ansprüche, **dadurch gekennzeichnet, dass** die länderspezifischen Daten in der Programmerweiterung (26) abgelegt sind.

9. Verfahren nach einem der vorhergehenden Ansprüche, **dadurch gekennzeichnet, dass** bei einem Überholwunsch des Fahrers der Soll-Abstand des zu steuernden Fahrzeugs zur Kolonne vorübergehend auf einen vorgegebenen Mindestabstand gesetzt wird.

10. Verfahren nach einem der vorhergehenden Ansprüche, **dadurch gekennzeichnet, dass** zur normalen Abstands- und Geschwindigkeitsregelung zurückgekehrt wird, wenn der Überholvorgang abgebrochen wird oder ausgeführt ist oder ein Spurwechsel vollzogen ist.

11. Verfahren nach einem der vorhergehenden Ansprüche, **dadurch gekennzeichnet, dass** die in der Programmerweiterung (26) der Abstands- und Geschwindigkeitsregelung (22) abgelegten länderspezifischen Daten durch Ländererkennung über ein GPS-System abrufbar sind.

12. Verfahren nach Anspruch 11, **dadurch gekennzeichnet, dass** die Daten über eine Internet-Verbindung automatisch aktualisiert werden.
